# FASCICULE DE BREVET EUROPEEN

(11) **EP 0 895 433 B1**
(45) Date de publication et mention de la délivrance du brevet: **30.07.2008**
(21) Numéro de dépôt: 98202419.2
(22) Date de dépôt: 20.07.1998
(51) Int. Cl.: H04Q 7/22

(54) **Appareil téléphonique comportant une station de base et au moins un dispositif de combiné et procédé pour y diffuser des messages**
Telefongerät mit einer Basisstation und mindestens einer Mobilstation und Verfahren zur Übertragung von Nachrichten
Telephonic device with a base station and a mobile station and method for sending and receiving messages

(30) Priorité: 29.07.1997 FR 9709644
(43) Date de publication de la demande: 03.02.1999
(73) Titulaire: Koninklijke Philips Electronics N.V., 5621 BA Eindhoven (NL)
(72) Inventeur: Vitel, Sandrine, 75008 Paris (FR)
(74) Mandataire: van Oudheusden-Perset, Laure E.

(56) Documents cités:
- EP-A- 0 693 860
- WO-A-92/14327
- WO-A-97/10684
- FR-A- 2 724 278
- P.CHRISTAL: "GSM-'Handy' mit Top-Handling" SIEMENS TELECOM REPORT, vol. 16, no. 6, novembre 1993 - décembre 1993, pages 332-5, XP000425543 MUNCHEN,DE

## Description

L'invention concerne un appareil téléphonique comportant :
- une station de base connectée au réseau commuté, pourvue d'un premier organe de gestion formé, entre autres, par un ensemble à processeur, par une mémoire contenant un programme d'exécution et par une mémoire vive,
- au moins un dispositif de combiné pourvu d'un deuxième organe de gestion formé, entre autres, par un ensemble à processeur, par une mémoire contenant un programme d'exécution et par une mémoire vive, et d'un organe de sortie pour restituer des informations,
- des moyens pour transmettre des messages élémentaires de longueur réduite.

L'invention concerne aussi un procédé mis en oeuvre dans un tel appareil et concerne également un dispositif de combiné convenant à un tel appareil.

L'invention trouve des applications importantes dans les systèmes de télécommunication impliquant des protocoles, c'est notamment le cas des appareils téléphoniques répondant à la norme DECT, par exemple.

Les appareils téléphoniques de ce type comportant bien souvent une multitude de dispositifs de combiné offrent de plus en plus de fonctions à l'usager.

Une fonction dont le besoin se fait sentir de plus en plus est la transmission de messages diffusés vers les dispositifs de combiné. Ces messages sont le plus souvent destinés à être visualisés sur l'écran de ces dispositifs. La nature de ces messages est variée et peut être de la publicité telle que maintenant les opérateurs fournissent à leurs abonnés ou la visualisation d'un annuaire etc...

La demande de brevet WO-97/10684 décrit un appareil téléphonique de type DECT comportant une station de base connectée au réseau commutée et au moins un dispositif de combiné comprenant un organe de sortie (par exemple un écran) et permettant de transmettre des messages d'information de la station de base vers le combiné. Ladite demande fait également mention de l'existence de message CLMS pour transmettre des messages de service.

La demande de brevet FR2724278 décrit un appareil de télécommunications comprenant des moyens de reconstitution de messages à partir de segments qui sont reçus dans un ordre inconnu à des moments différents, un numéro d'ordre étant spécifié dans l'entête du segment. Une zone spécifique indique si le segment courant est le dernier segment du message. Un tel appareil de télécommunications est très utile dans les communications utilisant des satellites, où aucune garantie n'existe que les messages seront reçus dans l'ordre de succession selon lequel ils ont été émis ou à un instant donné.

Un problème qui se pose avec ce genre de diffusion est qu'elle doit être effectuée dans de bonnes conditions de fiabilité vers les différents postes de combiné concernés sans pour cela utiliser de ressources importantes.

La présente invention propose un appareil du genre mentionné dans le préambule qui permet de diffuser aux différents dispositifs d'abonné des messages de nature variée avec une fiabilité satisfaisante.

Pour cela, un tel appareil est remarquable en ce qu'il est prévu des moyens pour transmettre des messages d'information de longueur quelconque formés :
- d'une partie émission munie de moyens de scission pour scinder en tronçons lesdits messages d'information et pour transmettre lesdits tronçons en tant que messages élémentaires, lesdits moyens de scission étant aptes à numéroter les tronçons et à assigner un identificateur au message d'information, le nombre total de tronçons étant inséré dans le premier tronçon,
- et d'une partie réception munie de moyens de restitution pour recevoir les messages élémentaires afin de restituer lesdits messages d'information audit organe de sortie, lesdits moyens de restitution comprenant des moyens de comparaison entre le numéro du tronçon courant et le nombre total de tronçons.

L'idée de l'invention consiste à utiliser la possibilité de diffuser à tous les dispositifs de combiné des informations par les messages CLMS tels que définis dans la norme DECT.

La description suivante faite en regard des dessins ci-annexés, le tout donné à titre d'exemple non limitatif, fera bien comprendre comment l'invention peut être réalisée.

La figure 1 montre un appareil conforme à l'invention.

La figure 2 montre comment les messages d'information à diffuser sont traités.

La figure 3 montre un diagramme explicitant le fonctionnement de la station de base.

La figure 4 montre un diagramme explicitant le fonctionnement d'un dispositif de combiné.

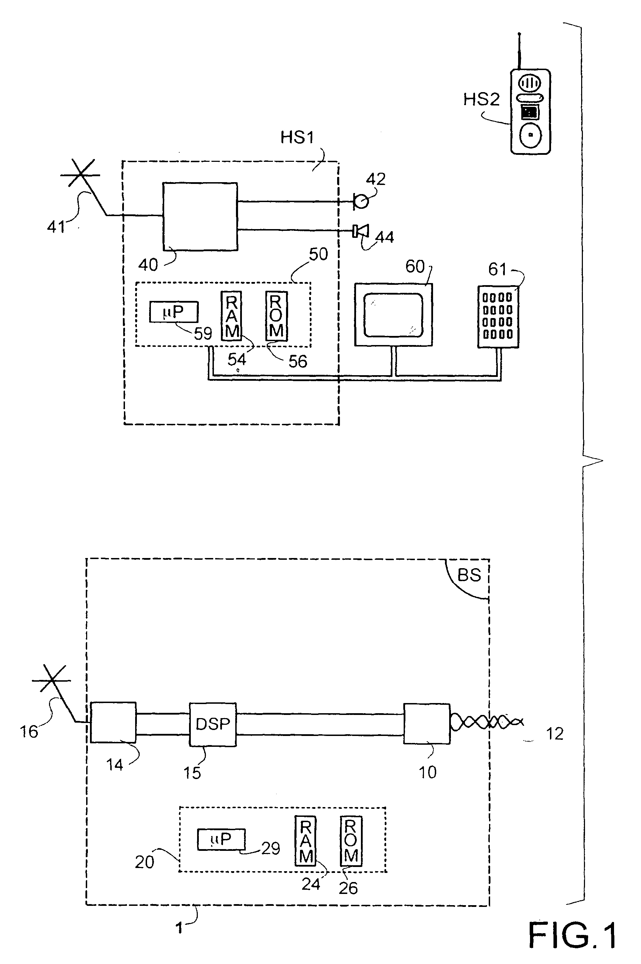

A la figure 1, l'appareil qui est représenté est un appareil répondant aux normes DECT. La référence 1 montre la station de base BS à laquelle peuvent être rattachés, par voie radioélectrique, une pluralité de dispositifs de combiné HS1, HS2, ... Cette station de base 1 comporte, entre autres, un circuit de ligne 10 qui lui permet d'être raccordée au réseau commuté via une ligne téléphonique 12 et un circuit radioélectrique 14 qui autorise le dialogue avec les différents combinés HS1, HS2,..., en émettant et en recevant des ondes par l'intermédiaire d'une antenne 16. Pour coder en numérique toutes les informations de nature analogique qui transitent à l'intérieur du circuit de base, il est prévu un organe de traitement de signal 15 formé autour d'un processeur de signal DSP qui traite les signaux vocaux notamment.

Tous les éléments de ce circuit de base 1 sont gérés par un organe de gestion à microprocesseur 20. Cet organe est composé, notamment, de la façon usuelle, d'une mémoire vive 24, d'une mémoire morte 26 contenant les instructions de fonctionnement de l'appareil et d'un processeur de gestion 29. Le dispositif de combiné HS1, seul montré en détail (le dispositif HS2 pouvant être de structure identique) comporte un ensemble de communications 40 muni d'une antenne 41 qui lui permet de communiquer avec la station de base BS et de là, avec les autres dispositifs de combiné HS2,.... Cet ensemble traite les informations en provenance du microphone 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. Le dispositif HS1 comporte aussi un écran 60 sur lequel différentes informations sont affichées et un clavier 61. Ces combinés sont des mobiles et de ce fait sont alimentés par un accumulateur, non représenté sur la figure 1.

Avec ce genre d'appareil, on souhaite diffuser différents messages sans aucune contrainte de longueur vers les dispositifs de combiné HS1,...

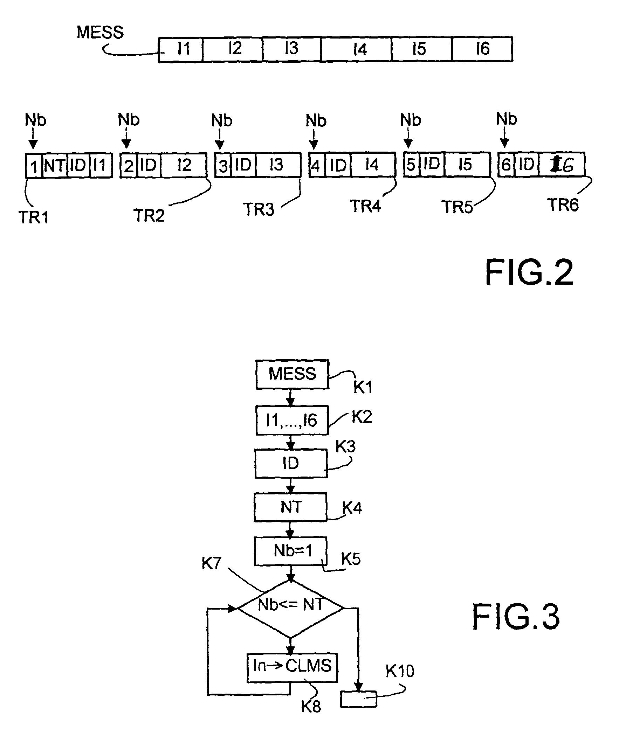

La figure 2 montre comment un message d'information MESS de longueur quelconque peut être diffusé selon l'invention.

Ce message MESS formé d'un certain nombre d'éléments binaires est décomposé en un certain nombre, six dans l'exemple, de tronçons de messages TR1, TR2, ...TR6 contenant chacun une partie I1, I2,...I6 du message MESS. A ce message est affectée une valeur d'identification ID. Cette valeur ID est insérée dans chacun des tronçons TR1,...TR6. Le premier tronçon contient, en outre, la valeur NT (=6) donnant le nombre total de tronçons formant le message. De plus, chaque tronçon contient un numéro d'ordre Nb qui évolue donc de 1 à 6. Chacun de ces tronçon TR1..., TR6 est formé de 20 octets et sont transmis comme un message CLMS défini par la norme DECT et plus précisément au paragraphe 8.3 du fascicule ETS 300 175-5. C'est-à-dire qu'ils sont transmis dans 5 sections contenant 4 octets.

La figure 3 montre les étapes de fonctionnement effectuées au niveau de la station de base. Ces étapes sont exécutées au moyen de l'organe de gestion 20.

La case K1 indique la réception du message d'information MESS à diffuser vers les dispositifs de combiné. Puis ce message d'informations est découpé en tronçons (case K2) et chacun de ces tronçons reçoit un code d'identification ID (case K3) comme cela a déjà été dit. Le nombre total de tronçons NT est déterminé pour être inséré dans le premier tronçon (case K4). La numérotation des tronçons est initialisée comme indiqué à la case K5. Un test montré à la case K7 permet de stopper le processus de diffusion du message d'information. Chaque tronçon est alors encapsulé dans un message CLMS comme indiqué à la case K8. Lorsque le nombre Nb excède NT, le processus est alors fini (case K10).

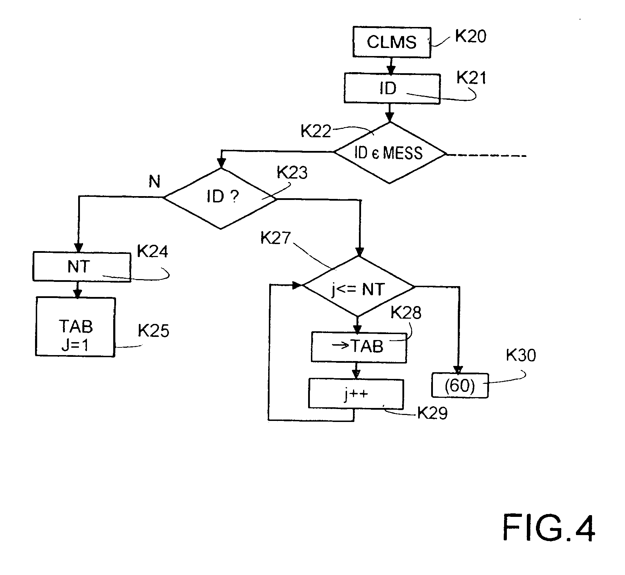

La figure 4 montre les étapes de fonctionnement effectuées au niveau du dispositif de combiné. Ces étapes sont exécutées au moyen de l'organe 50.

La case K20 indique la réception d'un message CLMS. La valeur d'identification ID est prélevée (case K21). Cette valeur permet de déterminer si le message élémentaire reçu est un élément d'un message d'information de longueur quelconque ou un message de service. Ceci est détecté à la case K22. Si c'est un message de service, le fonctionnement ne fait pas partie de l'invention et n'a pas à être décrit. Si c'est un message d'information, alors on passe à la case K23. Là, on détermine si un message d'information ayant un même identificateur ID a déjà été reçu. Sinon, on prélève la valeur NT (case K24) et on ouvre une table TAB, case K25, dont les dimensions sont données par cette valeur NT. Dans cette table un emplacement est réservé à une variable-compteur "j" ainsi qu'à la valeur NT affectée à ce message. Si la valeur ID a déjà donné lieu à l'ouverture d'une table, on teste, comme indiqué à la case K27, la valeur-compteur j affectée à ce message d'information. Si cette valeur est inférieure à la valeur NT du message, alors le tronçon reçu est mémorisé (case K28) à l'emplacement défini par le nombre Nb contenu dans le tronçon, puis on passe à la case K29 qui montre l'opération d'incrémentation de cette valeur-compteur j. Si le test de la case K27 est négatif, alors cela veut dire que tout le message a été reçu, alors la table est vidée de sorte que le message puisse être lisible sur l'écran 60, case K30.

## Revendications

1. Appareil téléphonique comportant :
- une station de base (1) connectée au réseau commuté, pourvue d'un premier organe de gestion (20) formé, entre autres, par un ensemble à processeur (29), par une mémoire (26) contenant un programme d'exécution et par une mémoire vive (24),
- au moins un dispositif de combine (HS1) pourvu d'un deuxième organe de gestion (50) formé, entre autres, par un ensemble à processeur (59), par une mémoire (56) contenant un programme d'exécution et par une mémoire vive (54), et d'un organe de sortie (60) pour restituer des informations,
- des moyens pour transmettre des messages élémentaires de longueur réduite,
**caractérisé en ce qu'**il est prévu des moyens pour transmettre des messages d'information de longueur quelconque formés :
- d'une partie émission munie de moyens de scission pour scinder en tronçons lesdits messages d'information et pour transmettre lesdits tronçons en tant que messages élémentaires, lesdits moyens de scission étant aptes à numéroter les tronçons et à assigner un identificateur au message d'information, le nombre total de tronçons étant inséré dans le premier tronçon,
- et d'une partie réception munie de moyens de restitution pour recevoir les messages élémentaires afin de restituer lesdits messages d'information audit organe de sortie, lesdits moyens de restitution comprenant des moyens de comparaison entre le numéro du tronçon courant et le nombre total de tronçons.

2. Appareil téléphonique selon la revendication 1, répondant à la norme DECT **caractérisé en ce que** les messages élémentaires sont des messages de service CLMS.

3. Procédé pour assurer la transmission de message d'information de longueur quelconque pour un appareil selon la revendication 1 **caractérisé en ce que** :
- le message à diffuser vers des abonnés concernés est découpé en tronçons,
- chaque tronçon est numéroté et se voit assigné un identificateur de message d'information, le nombre total de tronçons étant inséré dans le premier tronçon,
- chaque tronçon est transmis par un message CLMS après avoir été numéroté et identifié.

4. . Dispositif de combiné (HS1) convenant à un appareil selon la revendication 1, comprenant un organe de gestion (50) formé, entre autres, par un ensemble à processeur (59), par une mémoire (56) contenant un programme d'exécution et par une mémoire vive (54), et d'un organe de sortie (60) pour restituer des informations, **caractérisé en ce que** le dispositif de combiné (HS1) comprend en outre de moyens de restitution pour recevoir des messages d'information de longueur quelconque audit organe de sortie, un message d'information ayant été scindé en tronçons, chaque tronçon étant numéroté et se voyant assigné un identificateur de message d'information, le nombre total de tronçons étant inséré dans le premier tronçon, lesdits moyens de restitution comprenant des moyens de comparaison entre le numéro du tronçon courant et le nombre total de tronçons.

## Claims

1. A telephonic device comprising:
- a base station (1) connected to the switched network, comprising a first management element (20) formed, inter alia, by a processor assembly (29), by a memory (26) containing an execution program and by a random-access memory (24),
- at least one handset (HS1) comprising a second management element (50) formed, inter alia, by a processor assembly (59), by a memory (56) containing an execution program and by a random-access memory (54), and an output element (60) for returning data,
- means for transmitting elementary messages of reduced length,
**characterized in that** it comprises means for transmitting data messages having arbitrary lengths, formed by:
- a transmitting part comprising dividing means for dividing said data messages into segments and for transmitting said segments as elementary messages, said dividing means being suitable for numbering the segments and for assigning an identifier to the data message, the total number of segments being inserted into the first segment,
- and a receiving part comprising returning means for receiving the elementary messages in order to return said data messages to said output element, said returning means comprising comparing means for the comparison between the the running number of the segment and the total number of segments.

2. A telephonic device as claimed in claim 1, satisfying the DECT standard, **characterized in that** the elementary messages are CLMS service messages.

3. A method for ensuring the transmission of a data message of an arbitrary length for a device as claimed in claim 1, **characterized in that**
- the message to be broadcast to subscribers concerned is divided into segments,
- each segment is numbered and is assigned a data message identifier, the total number of segments being inserted into the first segment,
- each segment is transmitted by way of a CLMS message after it has been numbered and identified.

4. A handset (HS1) suitable for a device as claimed in claim 1, comprising a management element (50) formed, inter alia, by a processor assembly (59), by a memory (56) containing an execution program and by a random-access memory (54), and an output element (60) for returning data,
**characterized in that** the handset (HS1) further comprises returning means for receiving data messages having arbitrary lengths on the output element, a data message having been divided into segments, each segment being numbered and being assigned a data message identifier, the total number of segments being inserted into the first segment, said returning means comprising comparing means for the comparison between the current segment number and the total number of segments.

## Patentansprüche

1. Telefongerät mit :
- einer Basisstation (1), angeschlossen an das Wählnetz, versehen mit einem ersten Steuerorgan (20), gebildet u.a. aus einer Prozessoreinheit (29), aus einem Speicher (26), der ein Ausführungsprogramm enthält, und aus einem Schreib-Lese-Speicher (24),
- mindestens einem Handset-Gerät (HS1), versehen mit einem zweiten Steuerorgan (50), gebildet u.a. aus einer Prozessoreinheit (59), aus einem Speicher (56), der ein Ausführungsprogramm enthält, und aus einem Schreib-Lese-Speicher (54) und einem Ausgangsorgan (60), um Informationen wiederherzustellen,
- Mitteln für die Übertragung von elementaren Nachrichten verkürzter Länge,
**dadurch gekennzeichnet, dass** Mittel für die Übertragung von Informationsnachrichten beliebig geformter Länge vorgesehen sind :
- ein Sendeteil, versehen mit Mitteln zum Splitten, um die besagten Informationsnachrichten in Datenblöcke aufzuteilen und die besagten Datenblöcke als elementare Nachrichten zu übertragen, wobei die besagten Mittel zum Splitten dazu in der Lage sind, die Datenblöcke zu nummerieren, der Informationsnachricht einen Identifizierer zuzuteilen und die Gesamtzahl der Datenblöcke in den ersten Datenblock einzufügen,
- und ein Empfangsteil, versehen mit Restitutionsmitteln für den Empfang der elementaren Nachrichten, um die besagten Informationsnachrichten vom Ausgangsorgan wiederherzustellen, wobei die besagten Restitutionsmittel mit Mitteln für den Vergleich zwischen der Nummer des laufenden Datenblocks und der Gesamtzahl der Datenblöcke ausgestattet sind.

2. Telefongerät nach Anspruch 1, das der DECT-Norm entspricht, **dadurch gekennzeichnet, dass** die elementaren Nachrichten die eines CLMS-Nachrichtendienstes sind.

3. Verfahren zur Gewährleistung der Übertragung von Informationsnachrichten beliebiger Länge für ein Gerät nach Anspruch 1, **dadurch gekennzeichnet, dass** :
- die Nachricht zur Verbreitung an die betreffenden Teilnehmer in Datenblöcke unterteilt wird,
- jeder Datenblock nummeriert und ihm ein Identifizierer der Informationsnachrichten zugeteilt wird, wobei die Gesamtzahl der Datenblöcke in den ersten Datenblock eingefügt wird,
- jeder Datenblock mit einer CLMS-Nachricht übertragen wird, nachdem er nummeriert und identifiziert wurde.

4. Handset (HS1) für ein Gerät nach Anspruch 1, mit einem Steuerorgan (50), gebildet u.a. aus einer Prozessoreinheit (59), einem Speicher (56), der ein Ausführungsprogramm enthält, und aus einem Schreib-Lese-Speicher (54) und einem Ausgangsorgan (60), um Informationen wiederherzustellen, **dadurch gekennzeichnet, dass** das Handset-Gerät (HS1) außerdem Restitutionsmittel für den Empfang von Informationsnachrichten beliebiger Länge vom Ausgangsorgan enthält, wobei eine Informationsnachricht in Datenblöcke aufgeteilt, jeder Datenblock nummeriert und einem Identifizierer der Informationsnachrichten zugeteilt wird, um die Gesamtzahl der Datenblöcke in den ersten Datenblock einzufügen, und die besagten Restitutionsmittel mit Mitteln für den Vergleich zwischen der Nummer des laufenden Datenblocks und der Gesamtzahl der Datenblöcke ausgestattet sind.
